# FASCICULE DE BREVET EUROPEEN

(11) **EP 0 357 504 B1**
(45) Date de publication et mention de la délivrance du brevet: **31.03.1993**
(21) Numéro de dépôt: 89402358.9
(22) Date de dépôt: 30.08.1989
(51) Int. Cl.: B64D 29/06, F16B 39/28

(54) **Dispositif de fixation d'une biellette de suspension d'un turboréacteur**
Vorrichtung zum Befestigen einer Triebwerkaufhängungsstange an Luftfahrzeugen
Suspension rod fixation device for turbo engines

(30) Priorité: 01.09.1988 FR 8811434
(43) Date de publication de la demande: 07.03.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Kapala, Patrick, F-77410 Claye Souilly (FR); Mareix, Jean Pierre, F-77210 Avon (FR)
(74) Mandataire: Berrou, Paul

(56) Documents cités:
- FR-A- 1 345 619
- FR-A- 1 562 519
- FR-A- 1 605 357
- FR-A- 2 565 320
- US-A- 3 831 888
- US-A- 4 065 077

## Description

L'invention concerne un dispositif de fixation d'une biellette de suspension d'un turboréacteur, comportant un axe porteur de la biellette, constitué d'un manchon et d'un boulon passant dans l'alésage du manchon, serré entre les ailes parallèles d'une bride-support solidaire du carter du turboréacteur.

La solution généralement adoptée pour fixer une biellette de suspension de turboréacteur consiste à passer dans l'extrémité de la biellette un manchon porté par un boulon qui traverse les ailes parallèles des brides des carters.

Le manchon est protégé au droit des passages dans les ailes par des douilles qui garnissent les alésages.

Le boulon formant axe ne peut être démonté qu'en ayant accès aux deux côtés des brides, ce qui n'est généralement pas le cas. Il faut alors procéder à des démontages relativement importants pour déposer les biellettes de suspension.

L'invention a pour objet un dispositif permettant le démontage ou le montage aisé des biellettes de suspension d'un turboréacteur à partir d'un seul côté des brides de suspension sans nécessiter l'accès à l'autre côté.

Le document FR-A-2 565 320 prévoît un dispositif de ce type dans lequel le boulon présente une tête décentrée par rapport à son corps et dont la dimension maximale est inférieure au diamètre intérieur des douilles épaulées et dont la partie de tête faisant le plus saillie a, par rapport à l'axe du corps du boulon, une longueur supérieure au rayon intérieur du manchon.

Pour mettre en place ce dispositif, après avoir placé les douilles dans les alésages des ailes, on centre approximativement l'alésage de la tête de biellette entre les douilles, on introduit le boulon la tête la première dans la douille avant, la biellette et la douille arrière puis on enfile le manchon sur le corps du boulon et on visse l'écrou.

Ce type de dispositif présente l'inconvénient de devoir monter d'abord le boulon flottant puis ensuite le manchon autour du boulon et ceci en risquant d'endommager la douille arrière en cours de montage.

D'autre part, si en cours d'utilisation du moteur, un boulon vient à se rompre, le montage n'est pas exempt de dangers car, dans ce cas, l'extrémité brisée du boulon peut se retirer et le manchon, qui n'est plus maintenu, peut parvenir à glisser hors des alésages des ailes des brides. La biellette est libérée et le moteur n'est plus suspendu en ce point de fixation, ce qui peut entraîner la rupture successive des autres points de fixation.

La présente invention a pour but de résoudre ces problèmes de sécurité au moyen d'un montage à partir d'un seul côté des brides de suspension, qui reste en position et conserve une suspension effective du moteur même si l'un des deux éléments, boulon ou manchon vient à se rompre.

L'invention a donc pour objet un dispositif de fixation d'une biellette de suspension d'un turboréacteur comportant un manchon passant ses extrémités dans deux douilles, l'une dite amont et l'autre dite aval, maintenues dans des alésages coaxiaux prévus dans les ailes parallèles d'une bride support solidaire du carter du turboréacteur et accessible d'un seul côté, dit ici côté amont, un boulon passant dans un alésage axial du manchon et maintenant l'ensemble constitué par lui-même, le manchon et les deux douilles, entre les ailes de la bride et à l'intérieur des alésages de celles-ci.

Dans ce dispositif de fixation d'une biellette de suspension d'un turboréacteur conforme à l'invention, le boulon est vissé dans un taraudage de la douille aval, le manchon et la douille aval comportant des moyens d'antirotation relative constitués par des ergots longitudinaux de la partie aval du manchon qui coopèrent avec une lumière radiale à section oblongue traversant de part en part la douille aval, lesdits moyens d'antirotation étant aptes à reprendre le couple de serrage du boulon sur la douille aval en un couple de blocage du boulon sur le manchon. Selon une autre caractéristique essentielle, le manchon vient en appui contre la douille amont au moyen d'un épaulement tandis que la douille aval vient en appui contre l'aile aval de l'anneau support au moyen d'un épaulement, ladite- douille amont possédant un diamètre extérieur au moins égal à celui de l'épaulement de la douille aval. Ce dispositif comporte par ailleurs, selon l'invention, en amont, un moyen d'antirotation du manchon par rapport au carter, ledit manchon prenant appui, par la face amont de son épaulement sur ledit moyen d'antirotation.

L'invention sera plus concrètement explicitée dans le complément de description qui va suivre accompagné de planches de dessins parmi lesquelles :
- la figure 1 montre en section un premier mode d'exécution du dispositif de fixation selon l'invention ;
- la figure 2 montre le détail des moyens d'antirotation du manchon sur la douille aval en vue de dessus selon F des figures 1 ou 4 ;
- la figure 3 est une vue de gauche de la figure 1 ;
- la figure 4 est une vue en perspective éclatée de ce même mode d'exécution ;
- la figure 5 montre un deuxième mode d'exécution de l'invention ;
- la figure 6 est une vue de gauche de la figure 5.
- la figure 7 est une vue en perspective éclatée de ce second mode d'exécution de l'invention.

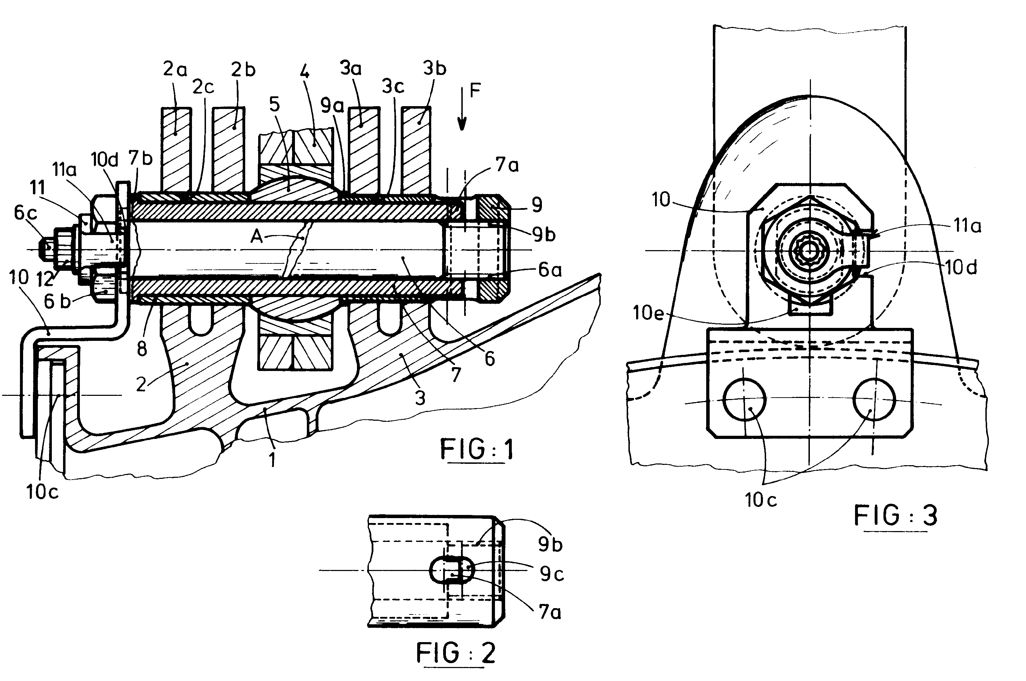

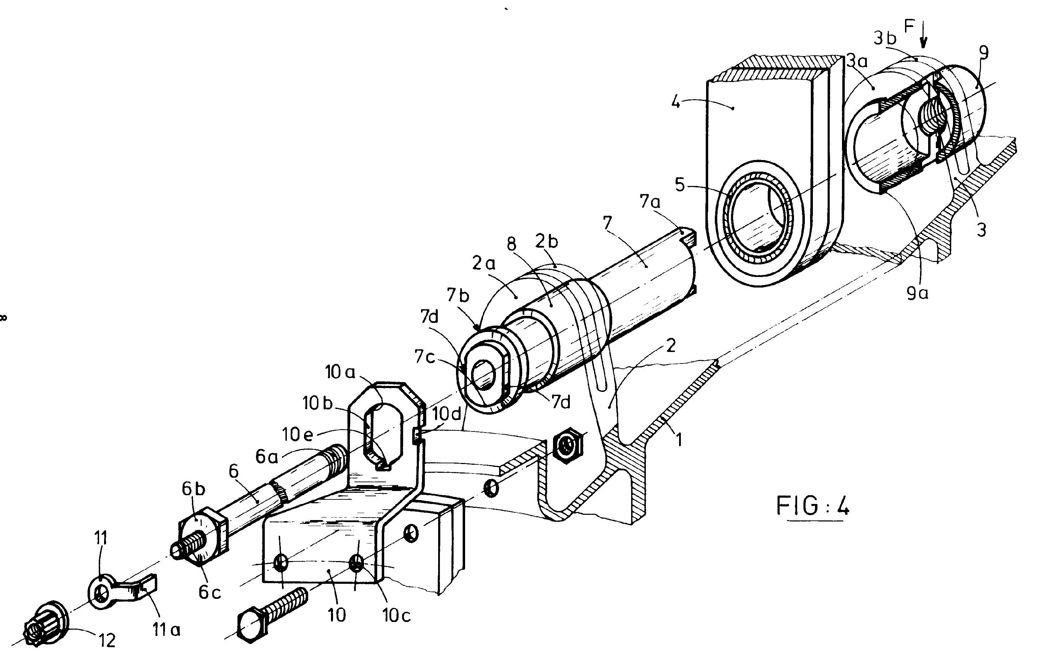

En regard des figures 1 à 4, on a représenté un carter 1 de turbomachine comportant des brides amont 2 et aval 3 d'accrochage du carter à une biellette de suspension 4 comportant une rotule 5 permettant de supporter des désalignements entre le moteur et sa suspension. Les brides amont 2 et aval 3 sont constituées chacune de deux ailes parallèles 2a, 2b ; 3a, 3b et l'on constate que, le carter 1 allant en s'évasant vers l'aval, les brides 2 et 3 ne sont accessibles pour le montage d'un dispositif de fixation que par l'amont. Il est donc nécessaire que le montage du boulon de fixation puisse s'effectuer avec une reprise du couple de serrage vers l'amont. Pour ce faire le dispositif de fixation comporte un boulon 6 entouré d'un manchon 7 passant ses extrémités dans deux douilles 8, 9 maintenues dans des alésages coaxiaux 2c, 3c des brides amont et aval.

La douille aval 9 comporte un épaulement 9a venant en appui contre l'aile 3a, et pour permettre l'introduction de la douille 9 ainsi épaulée, l'alésage 2c des ailes amont a un diamètre intérieur au moins égal à celui de l'épaulement 9a et la douille 8 possède donc un diamètre extérieur égal à celui de l'alésage 2c.

La douille 9 possède sur son extrémité aval un taraudage 9b dans lequel vient se visser l'extrémité filetée 6a du boulon 6. Afin de permettre le vissage du boulon dans la douille 9, celle-ci doit comporter des moyens d'antirotation par rapport au boulon et au manchon. Ces moyens d antirotation sont constitués par des ergots longitudinaux 7a du manchon qui viennent se disposer dans une lumière transversale 9c de la douille aval 9, ladite lumière débouchant radialement de part en part de la douille 9.

Le manchon 7 comporte à son extrémité amont un épaulement 7b venant en appui contre le bord amont de la douille 8 et possède sur la face avant de cet épaulement une portée cylindrique 7c comportant deux méplats 7d.

Pour assurer l'antirotation du manchon par rapport au carter 1, une patte de retenue 10 possédant un alésage oblong 10a ayant deux méplats 10b vient se disposer sur la portée 7c du manchon puis est vissée en 10c sur le carter. La patte 10 comporte également deux découpes 10d et 10e dans l'une desquelles viendra se loger la languette 11a d'une rondelle frein 11, ladite languette étant repliée sur un pan de la tête hexagonale 6b du boulon 6. La rondelle 11 est disposée sur une partie filetée 6c du boulon sur laquelle elle est serrée au moyen d'un écrou auto-freiné 12.

Dans ce mode de réalisation de l'invention le montage s'effectue de la façon suivante :
- a) on place la douille aval 9 dans l'alésage 3c de la bride 3 puis la douille amont 8 dans l'alésage 2c de la bride 2 ;
- b) on dispose la biellette de suspension 4 et la rotule 5 entre les brides 2 et 3 de façon sensiblement coaxiale avec les alésages des deux brides ;
- c) on glisse le manchon 7 dans la douille amont 8, dans la rotule 5 puis dans la douille aval 9, jusqu'à ce que les ergots 7a soient bloqués dans la lumière 9c de la douille 9. Le manchon est alors en appui par son épaulement 7b contre la douille amont 8 ;
- d) on dispose la patte de retenue 10 sur la portée cylindrique 7c du manchon et on la visse en 10c sur le carter ;
- e) on met en place le boulon 6 dans le manchon 7 et on le visse sur le taraudage 9b de la douille aval. On assure le serrage, dans la gamme de couples de serrage autorisés de telle sorte qu'un des pans de la tête hexagonale du boulon soit situé en face d'une des deux découpes 10d, 10e de la patte 10.
- f) on place alors la rondelle 11 avec sa languette 11a sur ce pan et dans cette découpe, puis on visse dessus l'écrou autofreiné 12.

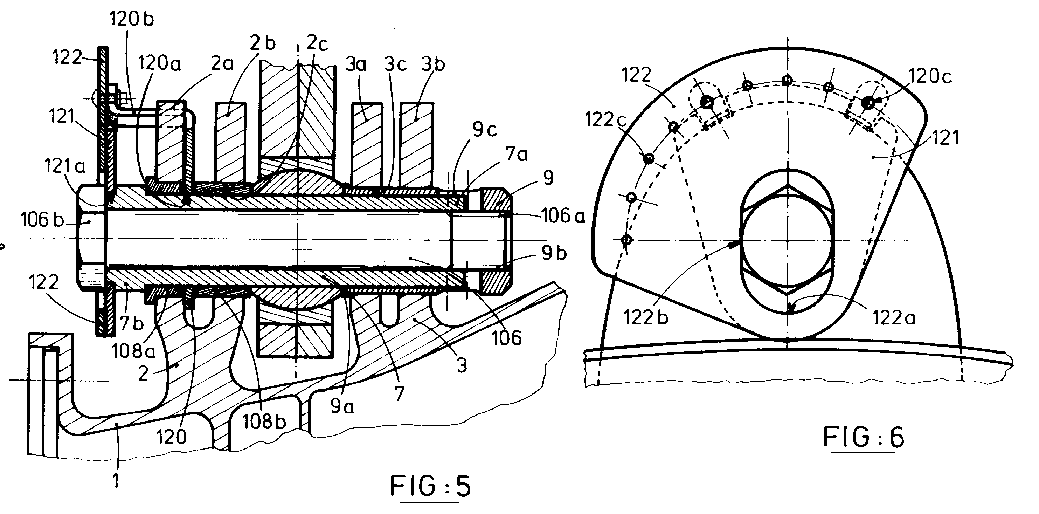

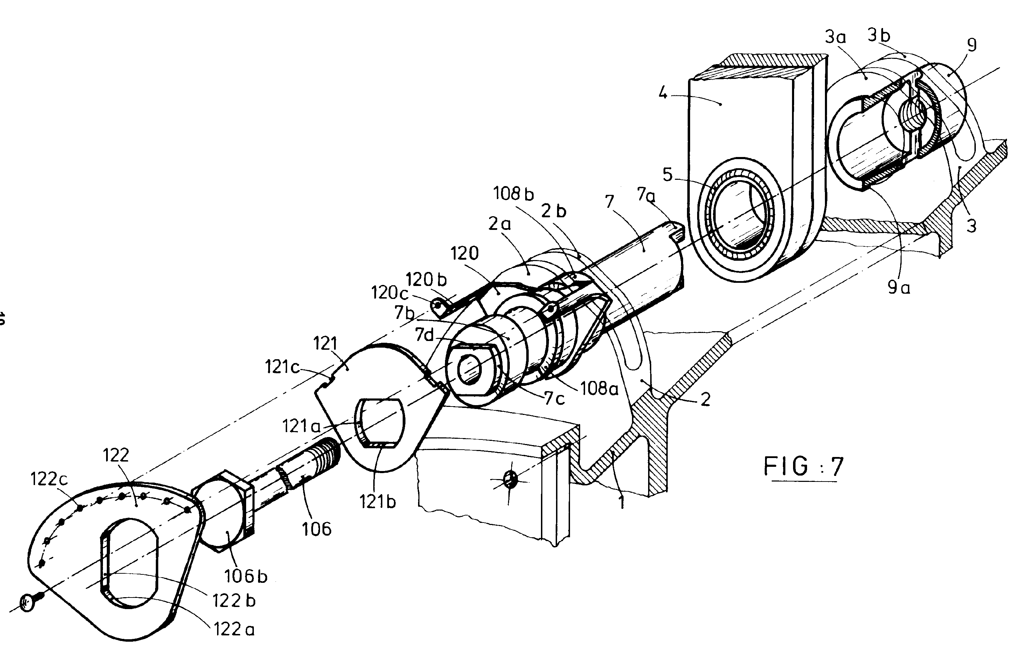

En référence aux figures 5 à 7, sera décrit le deuxième d'exécution de l'invention les éléments communs avec ceux des figures 1 à 4 porteront des chiffres de référence identiques tandis que les éléments modifiés porteront des chiffres de référence augmentés d'une centaine.

Dans ce mode de réalisation, le boulon 106 coopère avec le manchon 7 et avec la douille aval 9 de façon identique à celle du mode de réalisation précédent.

La différence de réalisation de ce mode par rapport au précédent réside dans la structure des moyens d'antirotation du manchon 7 sur le carter 1.

Ces moyens comprennent ici une première plaque 120 comportant un alésage 120a pour le passage du manchon 7 et possédant deux languettes recourbées 120b. Cette plaque 120 est disposée au montage entre les ailes 2a et 2b de telle sorte que les languettes 120b orientées vers l'amont viennent coiffer la partie supérieure de l'aile 2a. Ces languettes sont terminées par deux plats portant chacun un perçage 120c à la même distance de l'axe du manchon 7.

La première plaque 120 coopère avec une seconde plaque plane 121 possédant d'une part un alésage oblong 121a comportant deux méplats 121b coopérant avec ceux 7d de l'épaulement 7c du manchon 7, et d'autre part deux encoches 121c recevant les extrémités des languettes 120b.

Une patte antidévissage 122, comportant un alésage oblong 122a dont les méplats 122b coopèrent avec deux pans parallèles de la tête 106b du boulon 106, vient se plaquer contre la plaque 121.

La patte 122 comporte une série de perçages 122c sur un arc de cercle de même diamètre que celui des perçages 120c de la première plaque 120, par exemple neuf perçages à 15 degrés l'un de l'autre si les deux perçages 120c de la plaque 120 sont eux mêmes à 60 degrés l'un de l'autre.

On serre le boulon 106 de telle sorte que au moins deux perçages 122c de la patte 122 coïncident avec les deux perçages 120c de la plaque 120 et on y dispose deux rivets qui, verrouillant ensemble la plaque 120 et la patte 122, empêcheront tout dévissage du boulon 106.

Dans les deux modes de réalisation le dispositif de suspension peut supporter la rupture soit du boulon, soit du manchon sans risque mettant en cause la sécurité du montage.

En effet dans le premier mode de réalisation, si le boulon 6 vient à se rompre en A (figure 1) et même si la partie amont du boulon glisse hors du manchon 7, ce dernier restera en position car il sera retenu en amont par la plaque 10 et en aval par la douille aval 9.

De même, si le manchon 7 se brise tandis que le boulon 6 reste intact, aucune partie du manchon ne peut sortir de son logement.

Dans les deux cas, la suspension reste active sans risque de désalignement.

Une explication similaire montrerait qu'il en est de même dans le second mode de réalisation, la patte 122 retenant en amont le manchon 7 en cas de rupture du boulon 106.

## Revendications

1. Dispositif de fixation d'une biellette (4) de suspension d'un turboréacteur comportant un manchon (7) passant ses extrémités dans deux douilles, l'une dite amont (8,108) et l'autre dite aval (9,109) maintenues dans des alésages coaxiaux prévus dans les ailes parallèles (2a, 2b, 3a, 3b) d'une bride support solidaire du carter du turboréacteur et accessible d'un seul côté, dit côté amont, un boulon (6,106) passant dans un alésage axial du manchon et maintenant l'ensemble constitué par lui-même, le manchon et les deux douilles, entre les ailes de la bride et à l'intérieur des alésages de celles-ci, dispositif caractérisé en ce que,
le boulon (6,106) est vissé dans un taraudage (9b) de la douille aval (9), en ce que le manchon (7) et la douille aval (9) comportent des moyen d'antirotation relative constitués par des ergots longitudinaux (7a) de la partie aval du manchon qui coopèrent avec une lumière radiale (9c) à section oblongue traversant de part en part la douille aval, lesdits moyens d'antirotation étant aptes à reprendre le couple de serrage du boulon (6) sur la douille aval (9) en un couple de blocage du boulon sur le manchon en ce que, le manchon (7) vient en appui contre la douille amont (8,108a) au moyen d'un épaulement (7b) tandis que la douille aval (9) vient en appui contre l'aile aval (3a) de l'anneau support au moyen d'un épaulement (9a) de, en ce que la douille amont (8,108a,108b) possède un diamètre extérieur au moins égal à celui de l'épaulement (9a) de la douille aval et en ce que, il comporte, en amont, un moyen d'antirotation du manchon (7) par rapport au carter, ledit manchon (7) prenant appui, par la face amont de son épaulement (7b) sur ledit moyen d'antirotation.

2. Dispositif de fixation selon la revendication 1, caractérisé en ce que le moyen d'antirotation du manchon sur le carter est constitué par une patte de retenue (10) vissée sur le carter et comportant un alésage (10a) muni de deux méplats (10b) coopérant avec deux méplats correspondants (7d) de l'épaulement (7c) du manchon (7).

3. Dispositif de fixation selon la revendication 2, caractérisé en ce qu'il comporte une rondelle frein (11) d'antidessérage du boulon (6), dont une patte recourbée (11a) coopère avec une découpe (10d, 10e) de la patte de retenue (10), ladite rondelle frein étant maintenue sur la tête du boulon au moyen d'un écrou (12).

4. Dispositif de fixation selon la revendication 1 caractérisé en ce que le moyen d'antirotation du manchon sur le carter est constitué par une première plaque (120) recourbée disposée en aval de l'aile amont (2a) et comportant deux languettes (120b) enserrant ladite aile amont et par une seconde plaque plane (121) comportant d'une part un alésage (121a) muni de deux méplats (121b) coopérant avec deux méplats (7d) correspondant de l'épaulement (7c) du manchon et d'autre part deux encoches (121c) coopérant avec les languettes (120b) de la première plaque (120).

5. Dispositif de fixation selon la revendication 4, caractérisé en ce qu'une patte antidévissage (122) de boulon et comportant un alésage oblong (122a) à deux méplats (122b) coopérant avec deux pans parallèles de la tête de boulon, est rivée sur la première plaque (120).

## Patentansprüche

1. Befestigungsvorrichtung für eine Stange (4) zur Aufhängung eines Turbotriebwerks
mit einer Hülse (7), deren Enden in zwei Buchsen laufen, von denen die eine als stromaufwärtige Buchse (8, 108) und die andere als stromabwärtige Buchse (9, 109) bezeichnet ist, wobei diese Buchsen in koaxialen Bohrungen gehalten sind, die in den parallelen Schenkeln (2a, 2b, 3a, 3b) eines mit dem Gehäuse des Turbotriebwerks fest verbundenen und nur von einer als stromaufwärtige Seite bezeichneten Seite aus zugänglichen Trägerflansch ausgebildet sind,
und mit einem Schraubenbolzen (6, 106), der durch eine axiale Bohrung der Hülse verläuft und die aus ihm selbst, der Hülse und den beiden Buchsen bestehende Einheit zwischen den Schenkeln des Flansches und im Inneren von deren Bohrungen hält,
**dadurch gekennzeichnet,**
daß der Schraubenbolzen (6, 106) in ein Gewinde (9b) der stromabwärtigen Buchse (9) eingeschraubt ist,
daß die Hülse (7) und die stromabwärtige Buchse (9) mit Drehsicherungsmitteln zur Verhinderung einer relativen Drehung dieser Teile ausgestattet sind, bestehend aus in Längsrichtung verlaufenden Vorsprüngen (7a) an dem stromaufwärtigen Teil der Hülse (7), die mit einer die stromabwärtige Buchse von einer zur anderen Seite durchdringenden radialen Öffnung (9c) mit langgestrecktemQuerschnitt zusammenwirken, wobei diese Drehsicherungsmittel das auf die stromabwärtige Buchse (9) einwirkende Anzugsmoment des Schraubenbolzens (6) aufnehmen und in ein Blockiermoment zum Blockieren des Schraubenbolzens an der Hülse (7) umwandeln können,
daß die Hülse (7) sich mit einer Schulter (7b) an der stromaufwärtigen Buchse (8, 108a) abstützt, während die stromabwärtige Buchse (9) sich mit einer Schulter (9a) an dem stromaufwärtigen Schenkel (3a) des Trägerflansches abstützt,
daß die stromaufwärtige Buchse (8, 108a, 108, 108b) einen Außendurchmesser besitzt, der wenigstens so groß ist wie derjenige der Schulter (9a) der stromabwärtigen Buchse,
und daß die Vorrichtung außerdem auf der stromaufwärtigen Seite ein Drehsicherungsmittel zur Verhinderung einer Drehung der Hülse (7) gegenüber dem Gehäuse aufweist, wobei die Hülse (7) sich über die stromaufwärtige Seite ihrer Schulter (7b) an diesem Drehsicherungsmittel abstützt.

2. Befestigungsvorrichtung nach Anspruch 1, dadurch gekennzeichnet, daß das Drehsicherungsmittel zur Verhinderung einer Drehung der Hülse gegenüber dem Gehäuse aus einer mit dem Gehäuse verschraubten Haltelasche (10) besteht, die eine Bohrung (10a) mit zwei Abflachungen (10b) aufweist, die mit zwei korrespondierenden Abflachungen (10e) der Schulter (7c) der Hülse (7) zusammenwirken.

3. Befestigungsvorrichtung nach Anspruch 2, dadurch gekennzeichnet, daß sie eine als Lockerungsschutz für den Schraubenbolzen (6) dienende Bremsscheibe (11) aufweist mit einem abgewinkelten Lappen (11a), der mit einem Ausschnitt (10d, 10e) der Haltelasche (10) zusammenwirkt, wobei die Bremsscheibe mittels einer Mutter (12) auf dem Kopf des Schraubenbolzens gehalten wird.

4. Befestigungsvorrichtung nach Anspruch 1, dadurch gekennzeichnet, daß das Drehsicherungsmittel zur Verhinderung einer Drehung der Hülse gegenüber dem Gehäuse aus einer auf der stromabwärtigen Seite des stromaufwärtigen Schenkels (2a) angeordneten ersten abgewinkelten Platte (120) besteht mit zwei Zungen (120b), die den stromaufwärtigen Schenkel umspannen, sowie aus einer zweiten ebenen Platte (121) mit einerseits einer Bohrung (121a) mit zwei Abflachungen (121b), die mit zwei korrespondierenden Abflachungen (7e) der Schulter (7c) der Hülse zusammenwirken, und andererseits zwei Einschnitten (121c), die mit den Zungen (120b) der ersten Platte (120) zusammenwirken.

5. Befestigungsvorrichtung nach Anspruch 4, dadurch gekennzeichnet, daß auf der ersten Platte (120) eine Schraubensicherungslasche (122) für den Schraubenbolzen aufgenietet ist mit einem Langloch (122a) mit zwei Abflachungen (122b), die mit zwei parallelen Flächen des Kopfes des Schraubenbolzens zusammenwirken.

## Claims

1. Device for attaching a turbojet engine suspension link (4) comprising a sleeve (7) with its ends fitting into two bushes, one called the upstream one (8, 108) and the other, called downstream one (9, 109) held in coaxial holes provided in the parallel webs (2a, 2b, 3a, 3b) of a supporting bracket fixed to the casing of the turbojet engine casing and accessible only from one side, called the upstream side, a bolt (6, 106) passing through an axial bore in the sleeve and maintaining the assembly constituted by itself, the sleeve and the two bushes, between the webs of the bracket and inside the holes in these webs, device characterised in that the bolt (6, 106) is screwed into a tapped section (9b) in the downstream bush (9), in that the sleeve (7) and the downstream bush (9) comprise a means of preventing their relative rotation constituted by longitudinal spigots (7a) on the downstream part of the sleeve which work in conjunction with a radial recess (9c) of oblong cross section running from side to side of the downstream bush, the said means of rotation prevention being capable of transforming the torque of tightening the bolt (6) in the downstream bush (9) into a torque locking the bolt to the sleeve, in that the sleeve (7) bears against the upstream bush (8, 108a) by means of a shoulder (7b) whilst the downstream bush (9) bears against the downstream web (3a) of the supporting ring by means of a shoulder (9a) [of], in that the upstream bush (8, 108a, 108b) has an outer diameter at least equal to that of the shoulder (9a) of the downstream bush and in that it comprises, upstream, a means of preventing the rotation of the sleeve (7) in relation to the casing, the said sleeve (7) bearing through the upstream face of its shoulder (7b) against the said means of rotation prevention.

2. Attachment device in accordance with Claim 1, characterised in that the means of preventing rotation of the sleeve in relation to the casing is constituted by a retaining piece (10) bolted to the casing and comprising a hole (10a) with two flats (10b) working in conjunction with two corresponding flats (7d) on the shoulder (7c) of the sleeve (7).

3. Attachment device in accordance with Claim 2, characterised in that it comprises a lock washer (11), to prevent the bolt (6) becoming unscrewed, of which a bent-over tab (11a) works in conjunction with a cut-out (10d, 10e) in the retaining piece (10) the said lock washer being held on the head of the bolt by means of a nut (12).

4. Attachment device in accordance with Claim 1, characterised in that the means of preventing the sleeve rotating relative to the casing is made up of a first bent plate (120) placed downstream of the upstream web (2a) and comprising two tabs (120b) enclosing the said upstream web and by a second flat plate (121) comprising on the one hand a hole (121a) with two flats (121b) working in conjunction with two corresponding flats (7d) on the shoulder (7c) of the sleeve and on the other hand two notches (121c) working in conjunction with the tabs (120b) on the first plate (120).

5. Attachment device in accordance with Claim 4, characterised in that a locking tab (122) for the bolt and comprising an oblong hole (122a) with two flats (122b) working in conjunction with two parallel flats of the bolt head is riveted to the first plate (120)
